Europäisches Patentamt

European Patent Office

Office européen des brevets

(11) Publication number: 0 449 052 A2

# EUROPEAN PATENT APPLICATION

(21) Application number: 91104000.4

(51) Int. Cl.5: G06F 11/10

(22) Date of filing: 15.03.91

(30) Priority: 29.03.90 US 502212

(43) Date of publication of application:
02.10.91 Bulletin 91/40

(84) Designated Contracting States:
DE FR GB IT

(71) Applicant: NATIONAL SEMICONDUCTOR
CORPORATION
2900 Semiconductor Drive P.O. Box 58090
Santa Clara California 95051-8090(US)

(72) Inventor: Wendell, Dennis L.
14207 110th Ave. Ct. E.
Puyallup WA 98374(US)

Inventor: Hochstedler, Charles
2307 37th Avenue S.E.
Puyallup, WA 98374(US)
Inventor: Lyon, Terry
1482 Centennial Way
Roseville, Minn. 55113(US)
Inventor: Proebsting, Robert
1445 Villa Drive
Los Altos, CA 94024(US)

(74) Representative: Sparing Röhl Henseler
Patentanwälte European Patent Attorneys
Rethelstrasse 123
W-4000 Düsseldorf 1(DE)

(54) Parity test method and apparatus for a memory chip.

(57) A parity checking scheme for a memory device includes address parity checking. Parity checking is conducted on the input, before data is stored. At least one portion of parity checking, e.g., address parity checking, has selectable odd/even polarity and can be selectably disabled. The address parity signal and data parity signal are combined into an overall parity signal.

FIG.1

The present invention relates to a parity test method and apparatus and in particular to a method and apparatus for testing parity on a memory chip.

Two major systems for ensuring data integrity include even parity systems and odd parity systems. In an even parity system, groups of bits, such as words, are configured to always have an even number of "1" bits. In an odd parity system, words are configured to always have an odd number of "1" bits. Typically, one bit in each word is designated a parity bit and is set at either 1 or 0 to provide each word with the desired even or odd number of "1" bits. In this way, when a word is detected which has incorrect parity, the word is known to be erroneous.

Parity checking of stored data is used in connection with certain memory systems. Typically, previous memory systems have not included devices for checking the parity of addresses. Address parity errors can be particularly troublesome because when such errors occur, data is stored in an incorrect address. often, such storage at an incorrect address results in a catastrophic (unrecoverable) error. Furthermore, failures which result from incorrect addresses typically occur many cycles (such as 5 to 1,000 cycles) after the error occurred, making it difficult or impossible to determine the source of the error from the state of the machine at such later time. Accordingly, there is a need for a memory device which includes address parity checking.

Previous memory devices have been used which have the capability for checking parity of data after it has been stored. The delay in detecting such parity errors after storage was sufficiently great that performance of meaningful diagnostics was difficult or impossible. Accordingly, there is a need for a system in which parity of data is checked before the data is stored in the memory locations.

Certain other features of previous data parity systems have also caused problems. In typical previous systems, the parity checking was accomplished by an emitter-coupled-logic (ECL) gate array or ECL small scale integration (SSI) OR/NOT chips. Such previous systems typically used as many as five integrated circuits (ICs) to insure correct transmission. Thus, the previous systems were relatively costly and inefficient. In previous systems, the memory system designer was required to design such gate arrays or other SSI devices for parity checking requirements. Because many of such parity devices were provided on separate integrated circuits, previous parity checking systems occupied an undesirable amount of board space and consumed an undesirable amount of power.

Previous data parity checking systems typically were designed to match the particular characteristics of a selected memory or memory system and thus were specific to the choice of even or odd parity, high or low assertion of an error signal, choice of which signals would be subjected to parity checking and choice of whether parity checking was to be conducted at all. Also, in many previous systems, when parity checking was implemented, the occurrence of a parity error caused automatic consequences such as a halt. In such systems, it was impractical or impossible to disable parity checking once it had been designed into a system. Accordingly, there is a need for a parity checking system in connection with memory devices which permits flexibility in the design and use of the parity checking system.

The present invention as defined in the independent claims involves checking the parity of address signals and, preferably,also the parity of signals in a memory chip. The parity is checked before storage of the data. Parity checking may be selectable and may be disabled if desired. The odd/even polarity of the parity system may be selected.

In the preferred system, an array of logic gates is used to selectively check parity of an incoming address and a second logic array is used to check parity of incoming data. The parity error signals of the first two logic arrays are provided to a third logic array which combines the results in a selectable fashion. Flexibility of the parity system is enhanced by providing a number of features which are selectable. Preferably, selectability of the features is provided in such a way as to reduce or minimize the number of additional input signals or pins needed to make the selection. For example, a single input line or pin is used both to provide the address parity bit and to disable address parity checking as desired.

The final parity result is preferably an active high signal to facilitate emitter dot ORing of several outputs. By providing for address parity checking of input signals, it becomes feasible to identify errors before data is stored in erroneous locations, in many cases, permitting correction of the error (such as by restarting the task immediately) or stopping the system for diagnostics.

Fig. 1 is a block diagram of a memory chip according to the present invention;

Fig. 2 is a schematic diagram of an address parity checking circuit according to the present invention;

Fig. 3 is a schematic diagram of a data parity checking circuit of the present invention;

Fig. 4 is a schematic diagram of a parity logic decode circuit according to the present invention; and

Fig. 5 depicts generally a computer system using the parity checking operation of the present invention.

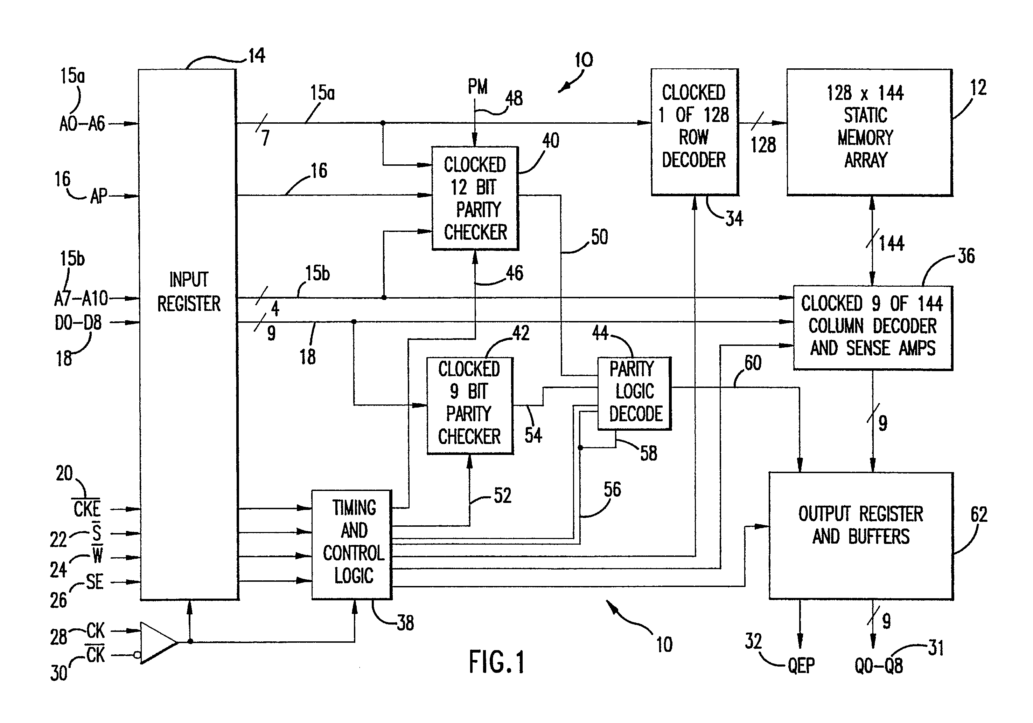

The present invention includes providing address and data parity checking in connection with a memory chip. Fig. 1 depicts the relationship of components of memory chip 10 according to the present invention.

The embodiment depicted in Fig. 1 shows a 2k X 9 memory chip 10 which includes a 128 x 144 static memory array 12. A memory chip such as that depicted can be used for a number of purposes including register files, writable control stores, cache RAM's, cache tag RAM's, and address translation look-aside buffers (TLBs). As will be apparent to those skilled in the art, the parity checking scheme of the present invention can also be used in connection with other types of memories including other sizes of memories, dynamic memories, read only memories, as well as in connection with the memories used for other purposes such as main memory, buffers, and the like.

The embodiment depicted in Fig. 1 includes an input register 14 for receiving a number of input signals. These input signals include eleven address bits 15a, 15b, an address parity signal 16, nine data bits 18, a clock enable ($\overline{\text{CKE}}$) signal 20, a chip select ($\overline{\text{S}}$) signal 22, a write enable ($\overline{\text{W}}$) signal 24, and a scan enable (SE) input 26. In all cases, an overbar indicates the complement of the signal, as the state which results in the active generation of the function.

In the depicted embodiment, eleven address bits A0-A10 are received on two address busses 15a, 15b. The eleven address bits A0-A10 provide the capability to address 2k 9-bit words of memory. As will be apparent, other address sizes can also be used in connection with another memory configuration. The address parity (AP) input 16 is set or reset, e.g. by the processor (not shown) to ensure that the combination of the address bits A0-A10 and the address parity bit AP will have the desired parity, i.e. even or odd. As described more fully below, when the address parity input (AP) is tied to the negative power supply $V_{EE}$, parity checking of the address is disabled. An internal pull-down to ($V_{EE}$) is included to disable address parity checking when this input is not connected.

The clock enable ($\overline{\text{CKE}}$) input 20 when in its active state (low) permits the memory device 10 to function normally. In the preferred embodiment, during normal functioning, inputs are registered by a rising clock edge. When $\overline{\text{CKE}}$ 20 is inactive, the memory device 10 does nothing on the rising clock edges, thereby providing a means for controlling the clock input to the device. An internal pull-down device is included to permit normal operation when $\overline{\text{CKE}}$ is not connected.

The chip select input 22 can be used to inhibit a write operation or force the device outputs to a deselected state when not writing. The write enable input 24 when active, allows a write operation to occur on each rising clock edge. The scan enable input 26 is used in connection with enabling a serial scan diagnostics mode. Timing for the memory device 10 is provided by a clock input (CK) 28 and its complement signal $\overline{\text{CK}}$ 30.

Two types of output are provided from memory chip 10 including nine bits 31 from a read operation and a parity error output 32. In the preferred embodiment, the parity error output 32 is normally low. A high value for the parity error output 32 provides an indication that a parity error has occurred. Since data input parity is preferably checked only during write cycles, a high value for the parity error output 32 on a read cycle indicates the address input has a parity error. A high value for the parity error output 32 on a write cycle can indicate either an address parity error or a data parity error. If it is desired to distinguish between data and address parity errors during a write cycle, an internal signal such as the address parity error signal 50 or the data parity error signal 54, described below, must be used.

In the preferred embodiment, the time required to output the parity error output 32 is sufficiently short that the parity error output 32 is available to be read out at approximately the same time that the data output 31 is available to be read out, during a read cycle.

The memory device 10 includes clocked row and column decoders and sense amps 34, 36 which are connected to the memory array 12. Preferably the decoders and sense amps are self-timed post charged devices, as described in U.S. Patent Application Serial No. 210,969, filed June 24, 1988, incorporated herein by reference. Timing and control logic 38 receives control and clock signals 20 through 30 and provides clock and control signals to control functioning of the memory chip 10, and as described more fully below.

The parity checking performed in the memory chip 10 is accomplished using three logic circuits, a 12 bit address parity checking circuit 40, a nine bit data parity checking circuit 42, and a parity logic decode circuit 44. The address parity checking circuit 40 receives the address and address parity bits 15a, 15b, 16, a clock signal 46 from the timing control 38 and a parity mode input 48. The parity mode input 48 when maintained at $V_{EE}$ will cause the address parity checking circuit 40 to check for odd parity on the address field. When the parity mode input 48 is maintained at the positive power supply value $V_{CC}$, the address parity checking circuit will check for even parity on the address field. The address parity checking circuit 40 outputs an address parity error signal ADDRPE for input to the parity logic decode circuit 44. The data parity checking circuit 42 receives nine data bits 18 and a clock signal 52 from the timing and control logic 38. The data parity checking device 42 outputs a data parity error signal 54 which will be an input to the parity logic decode circuit 44. The parity logic decode circuit 44 receives the ADDRPE and DATAPE signals 50, 54 along with certain control information 56 from the timing and control logic 38. The control information which is received includes the write enable signal 24 and a read signal as described below. The parity logic decode circuit 44 also receives from the timing and control logic 38 an address parity disable ($\overline{APDIS}$) complement signal 58. The parity logic decode circuit 44 outputs a parity error signal 60 which is passed to an output register 62 and forms the basis for the parity error output 32.

Table I summarizes the outputs and types of operation of the memory device 10 for various combinations of input signals.

## TABLE I

| INPUTS | | | | | | | | OUTPUTS | | TYPE OF OPERATION |
|---|---|---|---|---|---|---|---|---|---|---|
| CKE | S̄ | W̄ | A0-A10 | AP | PM | D0-D8 | DATA PARITY | Q | QEP | |
| H | X | X | X | X | X | X | (X) | NC | NC | No Operation |
| L | L | H | V | O | L | X | (X) | V | L | Read |
| L | L | H | V | E | H | X | (X) | V | L | Read |
| L | H | H | X | X | X | X | (X) | L | L | Deselect |
| L | L | H | V | E | L | X | (X) | V | H | Read, A Parity Error |
| L | L | H | V | O | H | X | (X) | V | H | Read, A Parity Error |
| L | L | L | V | O | L | V | (O) | NC | L | Write |
| L | L | L | V | E | H | V | (O) | NC | L | Write |
| L | H | L | X | X | X | X | (X) | NC | L | Write Inhibit |
| L | L | L | V | E | L | V | (O) | NC | H | Write, A Parity Error |
| L | L | L | V | O | H | V | (O) | NC | H | Write, A Parity Error |
| L | L | L | V | O | L | V | (E) | NC | H | Write, D Parity Error |
| L | L | L | V | E | H | V | (E) | NC | H | Write, D Parity Error |

H = High
L = Low
X = Undefined
V = Valid
O = Odd
E = Even
NC = No Change

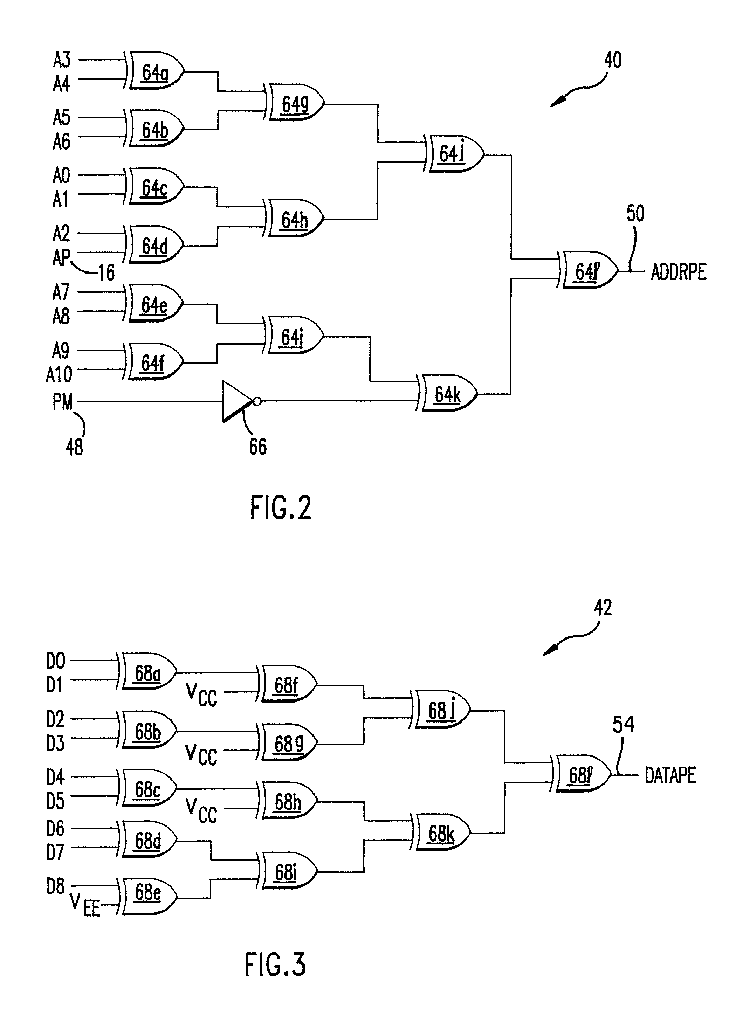

Fig. 2 depicts an embodiment of the address parity checking circuit 40. The depicted embodiment includes 12 exclusive-OR gates 64a through 64l and a NOT gate 66. Input to the first rank of exclusive-OR gates 64a through 64l include the 11 address bits A0-A10 and the address parity bit 16. The input for the NOT gate 66 is the parity mode signal 48.

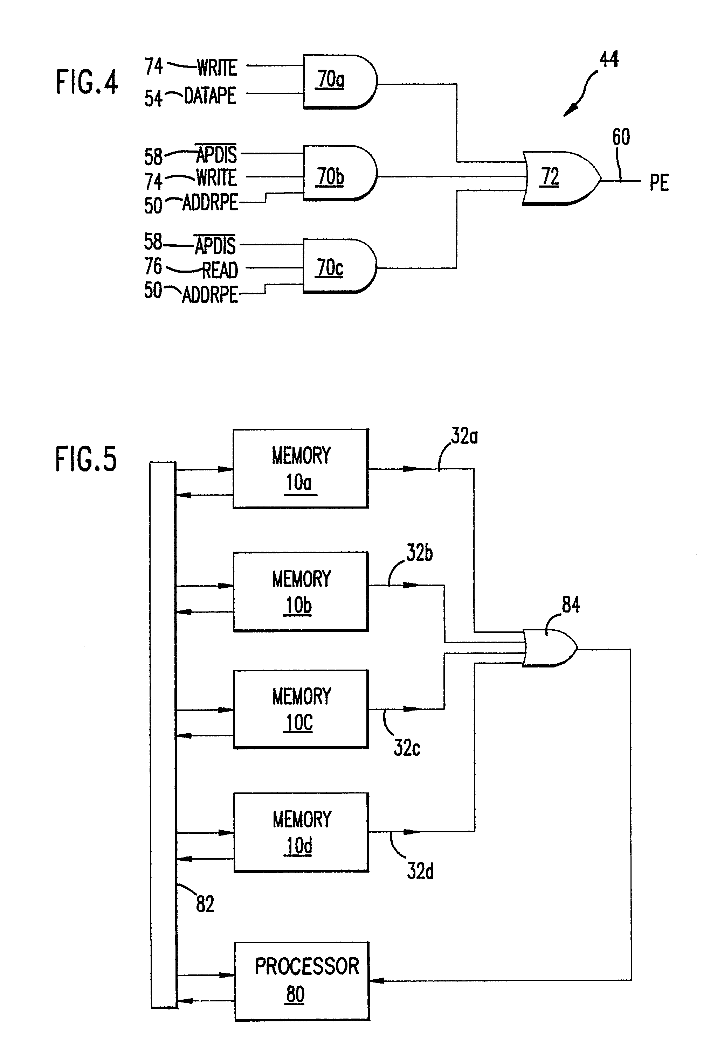

Table II provides examples of the output ADDRPE 50 obtained from various combinations of inputs A0-A10, AP, PM. As noted above, the parity mode signal PM 48 determines whether the address parity checking circuit 40 checks for odd parity or even parity. In the embodiment depicted in Fig. 5, the parity is asserted high, i.e. parity error is indicated when the ADDRPE 50 signal is in a high state. Other gate configurations can be used for parity error asserted low systems. In Table II, example 1 shows an odd parity system, because the PM signal 48 is at a $V_{EE}$ level indicated in Table II as a zero bit value. Example 1 is an example of an address in which there is no parity error. In example 1 all address lines have a zero value and accordingly, in order for the parity to be odd, the AP bit has a value of one. Calculation of the operation of the gate array on these values provides an ADDRPE value of zero, indicating no parity error. Example 2 is identical to example 1 except that one of the address bits (AO) has a value of one and thus there is an address parity error. Calculation of the operation of the gates 64, 66 on these input values yields a ADDRPE value of one, indicating a parity error, as desired. Example 3 is identical to example 2, except that the parity mode signal is tied to $V_{CC}$, indicated in Table II as a binary one value, thus causing the address parity checking of circuit 40 to check for even parity. Because there are an even number of bits set among the address lines A0-A10 and address parity bit AP, there is no parity error in example 3. Calculation of the effects of gates 64, 66 on the indicated input signals yields an ADDRPE value of zero, indicating the lack of a parity error. Example 4 is identical to example 3 except that all of the address bits are zero and, therefore, there is a parity error in the address lines. Calculation of the effect of the gates 64, 66 on this set of inputs yields an ADDRPE value of one, indicating the existence of a parity error, as desired.

As illustrated in Table II, the effect of the address parity checking circuit 40 is that the parity mode bit 48 can select the even/odd polarity of the parity checking system and, using the selected system, the ADDRPE output 50 will correctly reflect the existence or non-existence of an address parity error.

TABLE II

| Example No. | AP | PM | A0 | A1 | A2 | A3 | A4 | A5 | A6 | A7 | A8 | A9 | A10 | ADDRPE |
|---|---|---|---|---|---|---|---|---|---|---|---|---|---|---|
| 1 | 1 | 0 | 0 | 0 | 0 | 0 | 0 | 0 | 0 | 0 | 0 | 0 | 0 | 0 |
| 2 | 1 | 0 | 1 | 0 | 0 | 0 | 0 | 0 | 0 | 0 | 0 | 0 | 0 | 1 |
| 3 | 1 | 1 | 1 | 0 | 0 | 0 | 0 | 0 | 0 | 0 | 0 | 0 | 0 | 0 |
| 4 | 1 | 1 | 0 | 0 | 0 | 0 | 0 | 0 | 0 | 0 | 0 | 0 | 0 | 1 |

Fig. 3 depicts the data parity error checking circuitry 42. It will be noted that the data parity checking logic is substantially identical to portions of the address parity checking logic. In the embodiment depicted in Fig. 3, the parity of the data field is fixed and may be viewed as being either odd parity asserted high or even parity asserted low. For purposes of the following discussion, the data parity checking system 42 will be referred to as an odd parity asserted high system, although those skilled in the art will understand its application to an even parity asserted low system.

Fig. 3 includes 12 exclusive OR gates, 68a through 68l The variable inputs to the data parity checking circuit 32 are the nine data bits D0-D8. One of the first rank of exclusive OR gates 68e has one of the inputs tied to $V_{EE}$ (equivalent to a logical zero) and three of the second rank of exclusive OR gates 68f through 68h have one of their inputs tied to $V_{CC}$ (equivalent to a logical one).

Table III depicts the output of DATAPE 54 obtained from various inputs D0-D8. In example 1 of Table III bit D0 has a logical one value and the remaining data lines are zero. Calculation of the effect of the gates 68 on this set of input data indicates that the DATAPE output will be a logical zero, indicating the absence of a data parity error, as desired. Example 2 is identical to example 1 except that all data lines are zero and thus in this odd parity system, there is a parity error in the data. Calculation of the effect of the gates 68 on this set of input data indicates that the DATAPE output will have a logical one value, indicating the existence of a parity error in the data, as desired.

## TABLE III

| Example No. | D0 | D1 | D2 | D3 | D4 | D5 | D6 | D7 | D8 | DATAPE |
|---|---|---|---|---|---|---|---|---|---|---|
| 1 | 1 | 0 | 0 | 0 | 0 | 0 | 0 | 0 | 0 | 0 |
| 2 | 0 | 0 | 0 | 0 | 0 | 0 | 0 | 0 | 0 | 1 |

Fig. 4 depicts a parity logic decode circuit according to one embodiment of the present invention. The parity logic decode circuit 44 includes three AND gates 70a, 70b, 70c and an (inclusive) OR gate 72. Inputs to the parity logic decode circuit 44 include the address parity error signal ADDRPE 50 and the DATAPE 54. The $\overline{\text{APDIS}}$ signal 58 is obtained from the timing and control logic 38. Write enable signals 74 are obtained from the timing and control logic 38 and are the result of a NOT operation on the write enable complement signal 24. The read signal 76 is obtained from the timing and control logic 38 and is asserted when $\overline{\text{WE}}$ is in a high state.

Table IV depicts the parity error output 60 value for various input signals 50, 54, 58, 74, 76. Examples 1 and 2 demonstrate an asserted data parity error DATAPE 54 results in an overall parity error PE 60 only if it occurs simultaneously with a write enable 74. Thus, in the configuration depicted in Fig. 4 data parity is checked only during write cycles. Examples 3 through 5 indicate that when the address parity error ADDRPE 50 is asserted (and address parity is not disabled) the overall parity error signal is asserted only if the read or write enable signal is asserted. Examples 6 and 7 show that even when a read or write signal is asserted and the address parity error signal ADDRPE 50 is asserted, the overall parity error signal PE 60 will be unasserted if address parity is disabled, as indicated by an unasserted date of the $\overline{\text{APDIS}}$ signal 50. If one or more of the AND gates 70a, 70b, 70c outputs an asserted signal, the (inclusive) OR gate 72 will provide an asserted overall parity error signal PE 60.

## TABLE IV

| Example No. | READ | WRITE | DATAPE | $\overline{\text{APDIS}}$ | ADDRPE | PE |
|---|---|---|---|---|---|---|
| 1 | DC | 1 | 1 | DC | DC | 1 |
| 2 | DC | 0 | 1 | 0 | 0 | 0 |
| 3 | 0 | 1 | DC | 1 | 1 | 1 |
| 4 | 1 | 0 | DC | 1 | 1 | 1 |
| 5 | 0 | 0 | DC | 1 | 1 | 0 |
| 6 | 1 | 0 | 0 | 0 | 1 | 0 |
| 7 | 0 | 1 | 0 | 0 | 1 | 0 |

DC = Don't Care

Based on the above description, a number of advantages of the present invention are apparent. The present invention provides for a memory chip in which address parity checking is conducted. The polarity of at least one type of parity checking can be selected and, at least one type of parity checking can be disabled. The various disabling and selecting functions can be achieved while using only a small or minimal number of additional pins to control such selection or disabling. A single parity error signal may be output which is a result of combining both data parity checking and address parity checking. The fact that the overall parity error 60 is an active high signal facilitates emitter dot ORing several outputs. In this way, it is possible to obtain a single parity error signal which indicates whether a parity error has occurred in any of a plurality of memory chips with great facility. The parity checking is conducted on inbound signals rather than data which has already been stored in memory. In this way, errors can be detected early in a memory cycle, often permitting correction of the data and/or suspension of operation before data is erroneously stored in the memory.

As will be apparent to those skilled in the art, a number of variations and modifications of the present invention can be used. Although particular types of logic gates are depicted, it is well known that other types of logic gates can be substituted. For example, two serially connected NAND gates can be substituted for an AND gate. Preferably, the exclusive-OR circuitry is provided using rapid-switching devices, such as post-charge devices. Although the data parity checking logic disclosed is an odd parity device, even parity can also be used as will be apparent to those skilled in the art. Larger or smaller addresses for data words can be checked using the present scheme.

Fig. 5 depicts, in general terms, a computer system implementing the present invention. In the computer system depicted in Fig. 5, a processor 80 is connected by data and address buses 82, to a plurality of memory chips 10a-10d. The memory chips 10a-10d receive addresses, data, and control signals from the buses 82 and output data for return to the processor on the buses 82. Each memory chip 10a-10d outputs a parity error output 32a, 32b, 32c, 32d. These outputs are dot ORed by a gate 84. The result is a signal which indicates whether there is parity error in any of the memory devices 10a, 10b, 10c, and 10d. Such dot ORing is facilitated by providing the parity error signals 32a, 32b, 32c, and 32d in an asserted high configuration. The output from gate 82 can be provided, for example, as an interrupt input to the processor 80.

The description of the present invention has included a description of the preferred embodiment and certain variations and modifications. However, other variations and modifications of the invention can also be used, the scope of the invention being described by the following claims.

## Claims

1. An integrated circuit including parity checking, comprising:
   input register means for receiving a plurality of address bits;
   a memory array for readably storing bits in a plurality of addressable storage locations;
   control logic means for accessing at least one of said addressable storage locations corresponding to said address bits; and
   means for checking parity of said address bits.

2. An integrated circuit as claimed in claim 1, wherein said input register includes means for receiving at least one parity bit.

3. An integrated circuit as claimed in claim 2, further comprising means for asserting a parity error signal when said address bits and parity bit have a parity error.

4. An integrated circuit as claimed in claim 1, further comprising means for selecting whether said parity checking means checks for even parity or odd parity.

5. An integrated circuit as claimed in claim 1, wherein said input register means includes means for receiving a plurality of data bits, and further comprising means for checking parity of said data bits.

6. An integrated circuit as claimed in claim 5, further comprising means for disabling at least one of said means for checking said address bits and said means for checking said data bits.

7. An integrated circuit as claimed in claim 5, further comprising means for outputting a first parity error signal in response to said means for checking said address bits and said means for checking said data bits.

8. An integrated circuit as claimed in claim 7, wherein said first parity error signal has a first voltage when there is no parity error in said address and data bits and a second voltage, higher than said first voltage when there is a parity error in at least one of said plurality of address bits and said plurality of data bits.

9. An integrated circuit as claimed in claim 7, further comprising at least a second memory integrated circuit having means for outputting a second parity error signal and further comprising:
    means for ORing at least said first and second parity error signals.

10. In an integrated circuit, a method for accessing memory and checking parity, comprising:
    providing input register means for receiving a plurality of address bits;
    providing a memory array for readably storing bits in a plurality of addressable storage locations;
    providing control logic means for accessing at least one of said addressable storage locations corresponding to said address bits; and
    checking parity of said address bits after said address bits are received in said input register means.

11. A method, as claimed in claim 10, further comprising selecting the odd/even polarity of said step of checking said parity of said address bits

12. A method, as claimed in claim 10, wherein said input register means includes means for receiving a plurality of data bits, and further comprising checking parity of said data bits.

13. A method, as claimed in claim 12, further comprising storing at least one of said data bits in at least a first memory location, and wherein said step of storing is performed after initiating said step of checking parity of said data bits.

14. A method, as claimed in claim 12, further comprising providing a parity error signal in response to said steps of checking said parity of said address bits and checking parity of said data bits.

15. In a memory integrated circuit for reading and writing a plurality of bits in memory locations in response to address signals, data signals, read-enable signals and write-enable signals, apparatus for checking parity of input addresses and data comprising:
    first logic gate means for generating a first parity error signal when an input address contains a parity error;
    second logic gate means for generating a second parity error signal when input data contains a parity error
    means for providing an address-parity-disable signal; and
    third logic gate means for generating a third parity error signal upon occurrence of one of:
    said first parity error being asserted while said read enable signal is asserted and said address-parity-disable signal is deasserted;
    said first parity error signal being asserted while said write enable signal is asserted and said address-parity-disable signal is deasserted; and
    said second parity error signal being asserted while said write-enable signal is asserted.

16. Apparatus, as claimed in claim 15, wherein said first second and third logic gate means and said memory integrated circuit are formed on a single chip.

17. Apparatus, as claimed in claim 15, wherein said third parity error signal is unasserted when said address-parity-disable signal is asserted.

18. Apparatus, as claimed in claim 15, wherein said first logic gate means comprises:
    means for receiving a plurality of address bits, at least one parity bit and at least one parity mode bit;
    means for asserting said first parity error signal when said parity bit is in a first state and said address bits and parity bit have even parity; and
    means for asserting said first parity error signal when said parity bit is in a second state and said address bits and parity bit have odd parity.

19. Apparatus, as claimed in claim 15, further comprising,
   means for defining a negative power supply voltage; and
   means for asserting said address-parity-disable signal when said address parity bit is tied to said negative power supply voltage.

FIG.1

FIG.2

FIG.3

13

FIG.4

74 —— WRITE
54 —— DATAPE
70a

58 —— $\overline{\text{APDIS}}$
74 —— WRITE
50 —— ADDRPE
70b

58 —— $\overline{\text{APDIS}}$
76 —— READ
50 —— ADDRPE
70c

44

60

72

PE

FIG.5

MEMORY 10a

32a

MEMORY 10b

32b

84

MEMORY 10C

32c

MEMORY 10d

32d

82

PROCESSOR 80

14